# EUROPÄISCHE PATENTANMELDUNG

(11) **EP 1 723 842 A1**
(43) Veröffentlichungstag der Anmeldung: **22.11.2006**
(21) Anmeldenummer: 06009704.5
(22) Anmeldetag: 11.05.2006
(51) Int. Cl.: A01C 5/06, A01B 61/04

(54) **Hinter einem Scharhalter eines Säschares mittels eines federnd elastischen Armes angeordnete Saatandruckrolle**

(30) Priorität: 21.05.2005 DE 102005023522
(71) Anmelder: Amazonen-Werke H. Dreyer GmbH & Co. KG, 49205 Hasbergen (DE)
(72) Erfinder: Brook, Gebhard, 49249 Visbeck (DE); Steen, Rüdiger, 27798 Hude (DE)

(57) **Zusammenfassung**

Hinter einem an dem Scharhalter eines Säschares mittels eines federnd elastischen Armes, der zumindest eine Federwindung aufweist, angeordnete Saatandruckrolle, wobei der federnde Arm an einem an dem Scharhalter befestigten und auf die Fahrtrichtung bezogen nach hinten ragenden Halterungselement, welches den federnd elastischen Arm mittels eines gabelartigen Führungselementes beidseitig seitlich geführt, angeordnet ist. Um eine seitlich bessere Seitenführung der Saatandruckrolle bei Beibehaltung der Federmöglichkeit der Saatandruckrolle aufgrund der Federwindung in aufrechter Richtung beizubehalten, ist vorgesehen, dass das Halterungselement mit dem Führungselement im Bereich der Federwindung des federnd elastischen Armes angeordnet ist.

Anzahl Anhängende Zeichnungen: [10]

## Beschreibung

Die Erfindung betrifft eine hinter einem an dem Scharhalter eines Säschares mittels eines federnd elastischen Armes angeordnete Saatandruckrolle gemäß des Oberbegriffes des Patentanspruches 1.

Eine derartige Saatandruckrolle ist beispielsweise durch die EP 14 86 107 A1 bekannt. Diese Saatandruckrolle ist mittels eines federnden Armes, der zwei Federwindungen aufweist, an dem Scharhalter eines Säschares befestigt. Die Federwindung ist beabstandet dem gabelartigen Führungselement angeordnet. Es ergibt sich so eine relativ leicht seitlich ausweichende Anordnung der Saatandruckrolle.

Der,Erfindung liegt die Aufgabe zugrunde, eine seitlich bessere Seitenführung der Saatandruckrolle unter Beibehaltung der Federmöglichkeit der Saatandruckrolle aufgrund der Federwindung in aufrechter Richtung zu erreichen.

Diese Aufgabe wird erfindungsgemäß dadurch gelöst, dass das Halterungselement mit dem Führungselement im Bereich der Federwindung des federnd elastischen Armes angeordnet ist. Hierdurch wird eine gute Seitenstabilität des federnd elastischen Armes in einfacher Weise erreicht.

Eine besonders gute Seitenführung ergibt sich dadurch, dass das Führungselement ein durch die von der Federwindung gebildeten Öffnung geführtes bolzenartiges Element aufweist, das an den Seitenteilen des gabelartigen Führungselementes diese verbindend angeordnet ist. Hierdurch wird eine vorteilhafte Seitenführung des federnd elastischen Armes gewährleistet.

Um in einfacher Weise unterschiedliche Ablagetiefen des Saatgutes realisieren zu können, ist vorgesehen, dass an dem Ende des Halterungselementes eine mit dem Führungselement und/oder dem bodenartigen Element zusammenwirkende Tiefeneinstellungseinrichtung angeordnet ist.

Eine gute Führung des Armes lässt sich dadurch erreichen, dass die Seitenteile des gabelartigen Führungselementes dicht an den Außenseiten der Federwindungen anliegen, und dass die vorderen Bereiche der Seitenteile des gabelartigen Führungselementes gegenüber den mit den Federwindungen zusammenwirkenden Bereiche der Seitenteile nach innen abgekröpft sind und dicht an den Seitenflächen des Halterungselementes anliegen. Um sicherzustellen, dass die Federwindungen des federnd elastischen Armes an den Seitenteilen in dem vorgegebenen Abstand anliegen, ist vorgesehen, dass durch das von dem bolzenartigen Element gebildete Verbindungselement die Seitenteile des Führungselementes in dem durch die Breite der Federwindungen vorgegebenen Abstand fixiert werden.

Eine besonders gute Seitenführung ergibt sich dadurch, dass das bolzenartige Element im Bereich des Bolzens eine nutähnliche Aussparung aufweist, dass in diese Aussparung das Halterungselement fasst. Um Fertigungstolleranzen auszugleichen und eine gewünschte Zuordnung der Saatandruckrolle zu dem Säschar in einfacher Weise zu erreichen, ist vorgesehen, dass im seitlichen Befestigungsbereich des Halterungselementes am Scharhalter Einstellelemente zur Ausrichtung des Halterungselementes und der Saatandruckrolle in Bezug auf das Säschar angeordnet sind.

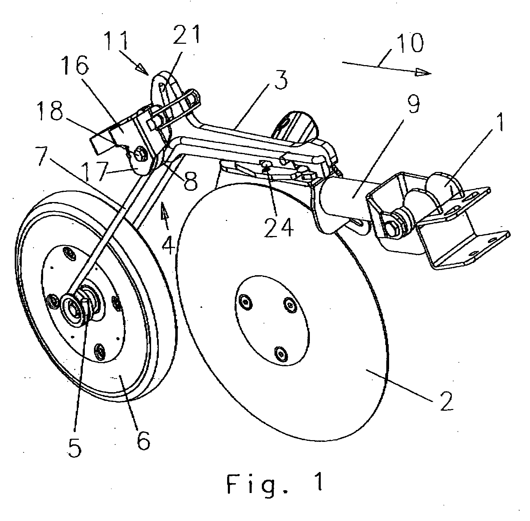

Weitere Einzelheiten der Erfindung sind den übrigen Unteransprüchen, der Beispielsbeschreibung und den Zeichnungen zu entnehmen. Hierbei zeigen
- Fig. 1: die an einem Säschar angeordnete Saatandruckrolle in perspektivischer Darstellung,

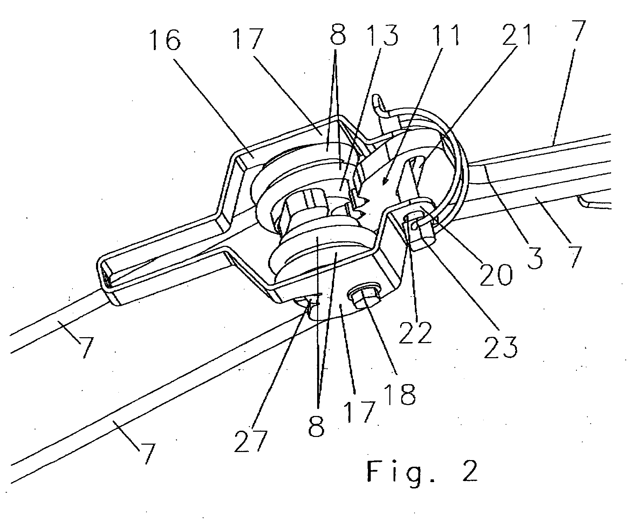

- Fig. 2: den Verstellmechanismus in perspektivischer Darstellung und einem vergrößertem Maßstab,

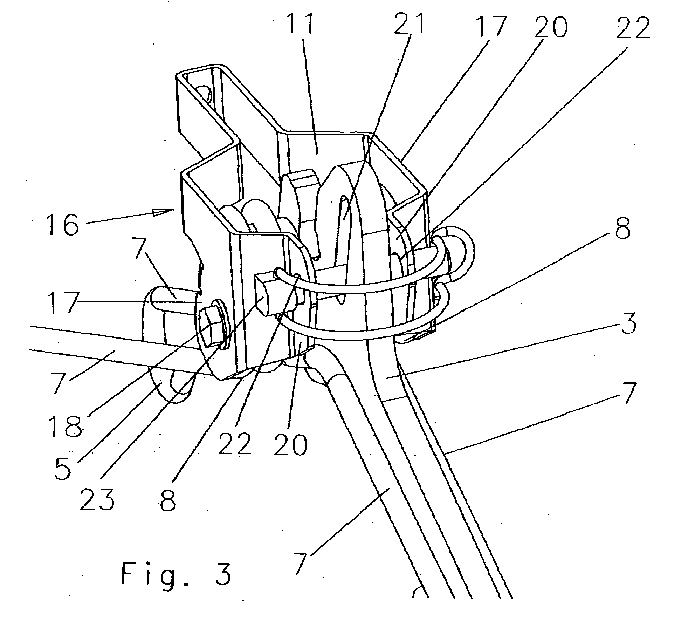

- Fig. 3: den Verstellmechanismus in perspektivischer Darstellung und einem anderem Maßstab,

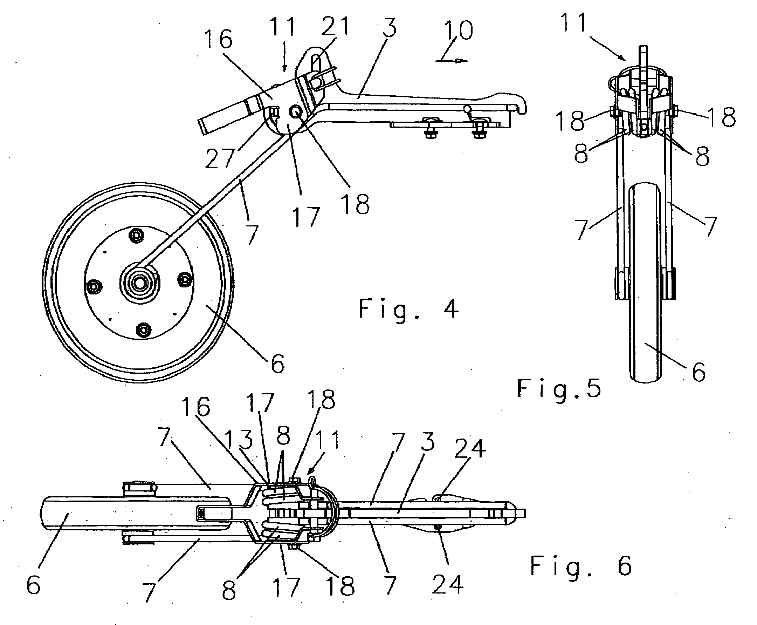

- Fig. 4: die Saatandruckrolle in Seitenansicht,
- Fig. 5: die Saatandruckrolle in der Rückansicht,

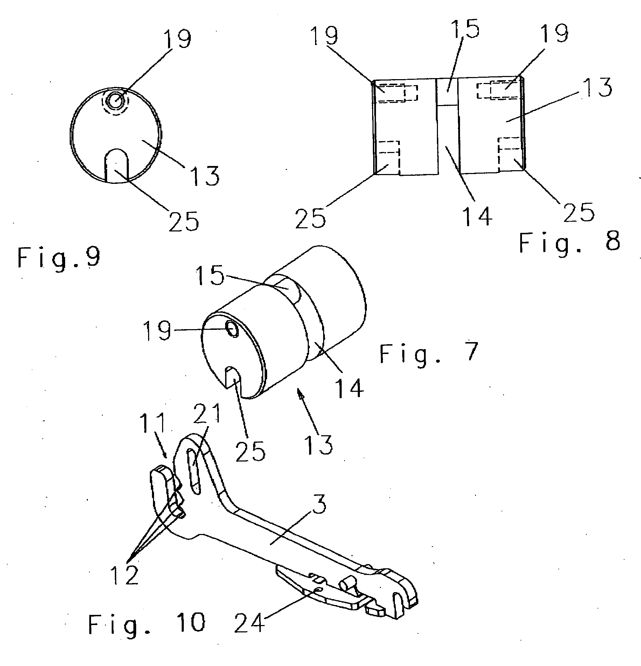

- Fig. 6: die Saatandruckrolle in der Draufsicht,
- Fig. 7: das bolzenartige Element in perspektivischer Darstellung,
- Fig. 8: das bolzenartige Element in der Vorderansicht,
- Fig. 9: das bolzenartige Element in Seitenansicht und
- Fig. 10: die am Säschar zu befestigende Halterung für die Saatandruckrolle in perspektivischer Darstellung.

An dem nicht dargestellten Scharbalken einer Sämaschine sind mittels der Gelenkanordnung 1 die Säschare 2 in aufrechter Ebene verschwenkbar angeordnet. An dem Säschar 2 der Sämaschine ist der Halter 3 angeordnet, an dem die federnde Halterung 4, an deren Ende 5 die Saatandruckrolle 6 frei drehbar angeordnet ist, befestigt. Die federnde Halterung 4 ist als elastischer Arm 7 mit zumindest einer Federwindung 8, im Ausführungsbeispiel mit zwei Federwindungen 8 ausgebildet. Der federnde Arm 7 ist an einem an dem Scharhalter 9 befestigten und auf die Fahrtrichtung 10 bezogen nach hinten ragenden Halterung 3 angeordnet. Der Halterung 3 besitzt am hinteren Ende eine Tiefenführungseinrichtung 11, die mehrere übereinander angeordnete Einkerbungen 12 aufweist, die sich an dem aufrechten Bereich des hinteren Teiles des Halters befinden. Des Weiteren weist die Tiefenführungseinrichtung 11 das bolzenartige Element 13 auf, das mit den Einkerbungen 12 zusammenwirkt. Das bolzenartige Element 13 weist in seinem mittleren Bereich eine nutähnliche Aussparung 14 auf, in welche der Halterung 3 fasst. Des Weiteren weist das bolzenartige Element 13 im Bereich der nutähnlichen Aussparung 14 den exzentrisch zum bolzenartigen Element 13 angeordneten Bolzen 15 auf.

Das bolzenartige Element 13 ist Teil eines Führungselementes 16 für den federnd elastischen Arm 7 und ist in der von der Federwindung 8 gebildeten Öffnung angeordnet und wird von der Federwindung 8 geführt. Das bolzenartige Element 13 ist an den Seitenteilen 17 des gabelartigen Führungselementes 16 die Seitenteile 17 verbindend angeordnet. Hierzu weist das gabelartige Führungselement 16 in den Seitenteilen 17 jeweils eine Bohrung auf, durch welche ein als Schraube ausgebildetes Verbindungselement 18 gesteckt ist und in die in dem bolzenartigen Element 13 befindliche Gewindebohrung 19 in verbindender Weise eingeschraubt ist. Das mit den Einkerbungen 12 zusammenwirkende bolzenartige Element 13 ist herausnehmbar in dem gabelartigen Führungselement 16 angeordnet und mittels vorzugsweise als Schraube ausgebildete Befestigungselement 18 befestigt, wie vor ausgeführt. Die Seitenteile 17 des gabelartigen Führungselementes liegen dicht an den Außenseiten der Federwindungen an. Die vorderen Bereiche 20 der Seitenteile des gabelartigen Führungselementes 16 sind gegenüber den dem den Federwindungen 8 zusammenwirkenden Bereichen 20 der Seitenteile 17 nach innen abgekröpft und liegen dicht an den Seitenflächen des Halters 3 an. Durch das von dem bolzenartigen Element 13 gebildete Verbindungselement werden die Seitenteile 17 des Führungselementes 16 in dem durch die Breite der Federwindung 8 vorgegebenen Abstand fixiert. Des Weiteren ist in dem Halterung 3 vor den Einkerbungen 12 ein Langloch 21 angeordnet. Das gabelartige Führungselement 16 weist in seinem vorderen Bereich in den Seitenteilen 16 jeweils eine weitere Bohrung 22 auf, durch die, wenn diese Bohrungen mit dem Langloch 21 zur Deckung gebracht werden, der Splint 23 gesteckt wird, um das Tiefenführungselement 11 nach dem Einrasten des Verbindungsbolzens 15 des bolzenartigen Elementes 13 in eine Kerbung 12 des Halters 3 entsprechend der gewünschten Einstellung der Saatandruckrolle 6 zu dem Säschar 2 eingerastet ist, um die Tiefenführungseinrichtung 11 zu arretieren.

Um die Saatandruckrolle 6 zu dem Säschar 2 in gewünschter Weise auszurichten, sind im seitlichen Befestigungsbereich des Halters 3 am Scharhalter 9 Einstellelemente 24 zur Ausrichtung des Halters 3 und der Saatandruckrolle 6 in Bezug auf das Säschar 2 angeordnet. Diese Einstellelemente 24 sind als Schrauben ausgebildet.

Um das bolzenartige Element 13 verdrehsicher an den Seitenteilen 17 des gabelartigen Führungselementes 16 zu befestigen, weist das bolzenartige Element 13 eine Aussparung 25 auf, in welche die Durchprägungen 26 der Seitenteile 17 fassen.

## Patentansprüche

1. Hinter einem an dem Scharhalter eines Säschares mittels eines federnd elastischen Armes, der zumindest eine Federwindung aufweist, angeordnete Saatandruckrolle, wobei der federnde Arm an einem an dem Scharhalter befestigten und auf die Fahrtrichtung bezogen nach hinten ragenden Halterungselement, welches den federnd elastischen Arm mittels eines gabelartigen Führungselementes beidseitig seitlich geführt, angeordnet ist, **dadurch gekennzeichnet, dass** das Halterungselement (3) mit dem Führungselement (11,16) im Bereich der Federwindung (8) des federnd elastischen Armes (7) angeordnet ist.

2. Saatandruckrolle nach Anspruch 1, **dadurch gekennzeichnet, dass** das Führungselement (11,16) ein durch die von der Federwindung (8) gebildeten Öffnung geführtes bolzenartiges Element (13) aufweist, das an den Seitenteilen (17) des gabelartigen Führungselementes (11,16) diese verbindend angeordnet ist.

3. Saatandruckrolle nach Anspruch 1, **dadurch gekennzeichnet, dass** an dem Ende des Halterungselementes (3) eine mit dem Führungselement (11,16) und/oder dem bolzenartigen Element (13) zusammenwirkende Tiefeneinstellungseinrichtung (11) angeordnet ist.

4. Saatandruckrolle nach Anspruch 3, **dadurch gekennzeichnet, dass** die Tiefenführungseinrichtung (11) mehrere übereinander angeordnete Einkerbungen (12) die an dem aufrechten Bereich des Halterungselementes (3) sich befinden, aufweist, dass in die Einkerbung (12) ein Bolzen (15) des bolzenartigen Elementes (13) des gabelartigen Führungselementes (16) fasst.

5. Saatandruckrolle nach Anspruch 4, **dadurch gekennzeichnet, dass** das mit den Einkerbungen (12) zusammenwirkende bolzenartige Element (13) herausnehmbar in dem gabelartigen Führungselement (16) angeordnet ist und mittels vorzugsweise als Schraube (18) ausgebildetes Befestigungselement an dem gabelartigen Führungselement (16) befestigt ist.

6. Saatandruckrolle nach einem oder mehreren der vorstehenden Ansprüche, **dadurch gekennzeichnet, dass** die Seitenteile (17) des gabelartigen Führungselementes (16) dicht an den Außenseiten der Federwindungen (8) anliegen, und dass die vorderen Bereiche der Seitenteile (20) des gabelartigen Führungselementes (16) gegenüber den mit den Federwindungen (8) zusammenwirkenden Bereiche (17) der Seitenteile nach innen abgekröpft sind und dicht an den Seitenflächen des Halterungselementes (3) anliegen.

7. Saatandruckrolle nach Anspruch 2, **dadurch gekennzeichnet, dass** durch das von dem bolzenartigen Element (13) gebildete Verbindungselement die Seitenteile (17) des Führungselementes (16) in dem durch die Breite der Federwindungen (8) vorgegebenen Abstand fixiert werden.

8. Saatandruckrolle nach einem oder mehreren der vorstehenden Ansprüche, **dadurch gekennzeichnet, dass** das bolzenartige Element (13) im Bereich des Bolzens (15) eine nutähnliche Aussparung (14) aufweist, dass in diese Aussparung (14) das Halterungselement (3) fasst.

9. Saatandruckrolle ach Anspruch 8, **dadurch gekennzeichnet, dass** der Bolzen (15) im Bereich der nutähnlichen Aussparung (14) exzentrisch zum bolzenartigen Element (13) bzw. außermittig im bolzenähnlichen Element (13) geordnet ist.

10. Saatandruckrolle nach Anspruch 1, **dadurch gekennzeichnet, dass** im seitlichen Befestigungsbereich des Halterungselementes (3) am Scharhalter (9) Einstellelemente (24) zur Ausrichtung des Halterungselementes (3) und der Saatandruckrolle (6) in Bezug auf das Säschar (2) angeordnet sind.
